# EUROPÄISCHE PATENTSCHRIFT

(11) **EP 2 829 157 B1**
(45) Veröffentlichungstag und Bekanntmachung des Hinweises auf die Patenterteilung: **15.06.2016**
(21) Anmeldenummer: 13716163.4
(22) Anmeldetag: 21.03.2013
(51) Int. Cl.: H05B 33/08

(54) **BETRIEBSSCHALTUNG FÜR LEUCHTDIODEN, MIT DIMMSIGNAL AUS HOCHFREQUENT MODULIERTEM IMPULSPAKETE-SIGNAL, MIT ABGESTIMMTEN FREQUENZEN**
OPERATING CIRCUIT FOR LEDS, HAVING DIMMING SIGNAL COMPRISING HIGH-FREQUENCY MODULATED PULSE PACKET SIGNAL WITH HARMONISED FREQUENCIES
CIRCUIT DE COMMANDE POUR DIODES ÉLECTROLUMINESCENTES AVEC SIGNAL DE VARIATION DE LUMIÈRE ISSU D`UN SIGNAL EN TRAINS D'IMPULSIONS MODULÉS A HAUTE FRÉQUENCE, AVEC DES FRÉQUENCES ACCORDÉES

(30) Priorität: 21.03.2012 AT 1082012
(43) Veröffentlichungstag der Anmeldung: 28.01.2015
(73) Patentinhaber: Tridonic GmbH & Co KG, 6850 Dornbirn (AT)
(72) Erfinder: MITTERBACHER, Andre, A-6850 Dornbirn (AT); KELLER, Ueli, CH-8755 Ennenda (CH); PEREIRA, Eduardo, CH-8854 Siebnen (CH)
(74) Vertreter: Banzer, Hans-Jörg
(86) Internationale Anmeldenummer: PCT/AT2013/000048
(87) Internationale Veröffentlichungsnummer: WO 2013/138829

(56) Entgegenhaltungen:
- US-A1- 2003 085 749
- US-A1- 2010 156 319

## Beschreibung

Die Erfindung betrifft eine Betriebsschaltung mit Leuchtdioden sowie ein Verfahren gemäß dem Oberbegriff der unabhängigen Patentansprüche.

### Technisches Gebiet

Halbleiterlichtquellen wie beispielsweise Leuchtdioden sind während der letzten Jahre für Beleuchtungsanwendungen zunehmend interessant geworden. Der Grund dafür liegt unter anderem darin, dass entscheidende technische Innovationen und große Fortschritte sowohl bei der Helligkeit als auch bei der Lichteffizienz (Lichtleistung pro Watt) dieser Lichtquellen erzielt werden konnten. Nicht zuletzt durch die vergleichsweise lange Lebensdauer konnten sich Leuchtdioden zu einer attraktiven Alternative zu herkömmlichen Lichtquellen wie Glüh- oder Gasentladungslampen entwickeln.

### Stand der Technik

Halbleiterlichtquellen sind aus dem Stand der Technik hinreichend bekannt und werden im Folgenden als LED (light-emitting-diode) abgekürzt. Dieser Begriff soll im Folgenden sowohl Leuchtdioden aus anorganischen Materialien als auch Leuchtdioden aus organischen Materialien umfassen. Es ist bekannt, dass die Lichtabstrahlung von LEDs mit dem Stromfluss durch die LEDs korreliert.

Zur Helligkeitsregelung werden LEDs daher grundsätzlich in einem Modus betrieben, in dem der Stromfluss durch die LED geregelt wird.

In der Praxis werden zur Ansteuerung einer Anordnung von einer oder mehrerer LEDs vorzugsweise Schaltregler, beispielsweise Tiefsetzsteller (Step-Down oder Buck Converter) verwendet. Ein solcher Schaltregler ist beispielsweise aus der DE 10 2006 034 371 A1 bekannt. Dabei steuert eine Steuereinheit einen hochfrequent getakteten Schalter (beispielsweise einen Leistungstransistor) an. Im eingeschalteten Zustand des Schalters fließt Strom über die LED Anordnung und eine Spule, die dadurch aufgeladen wird. Die zwischengespeicherte Energie der Spule entlädt sich im ausgeschalteten Zustand des Schalters über die LEDs (Freilaufphase). Der Strom durch die LED Anordnung zeigt einen zickzackförmigen zeitlichen Verlauf: bei eingeschaltetem Schalter zeigt der LED-Strom eine ansteigende Flanke, bei ausgeschaltetem Schalter ergibt sich eine abfallende Flanke. Der zeitliche Mittelwert des LED-stroms stellt den Effektivstrom durch die LEDanordnung dar und ist ein Maß für die Helligkeit der LEDs. Durch entsprechende Taktung des Leistungsschalters kann der mittlere, effektive Strom geregelt werden.

Die Funktion des Betriebsgeräts ist nun, einen gewünschten mittleren Stromfluss durch die LEDs einzustellen und die zeitliche Schwankungsbreite des Stroms, bedingt durch das hochfrequente Ein- und Abschalten des Schalters (tpyischerweise im Bereich oberhalb von 10 kHz), möglichst gering zu halten.

Eine große Schwankungsbreite des Stroms (Welligkeit oder Rippel) wirkt sich besonders bei LEDs nachteilig aus, da mit Veränderung der Stromamplitude sich das Spektrum des emittierten Lichts verändern kann.

Um das emittierte Lichtspektrum während des Betriebs möglichst konstant zu halten, ist es bekannt, bei LEDs für Helligkeitsregelungen nicht die Stromamplitude zu variieren, sondern ein sogenanntes PWM (pulse-widthmodulation) - Verfahren anzuwenden. Dabei werden den LEDs durch das Betriebsgerät niederfrequente (typischerweise mit einer Frequenz im Bereich von 100-1000 Hz) Pulspakete mit (im zeitlichen Mittel) konstanter Stromamplitude zugeführt. Dem Strom innerhalb eines Pulspakets ist der oben angeführter hochfrequente Rippel überlagert. Die Helligkeit der LEDs kann nun durch die Frequenz der Pulspakete gesteuert werden; die LEDs können beispielsweise gedimmt werden, indem der zeitliche Abstand zwischen den Pulspaketen vergrößert wird.

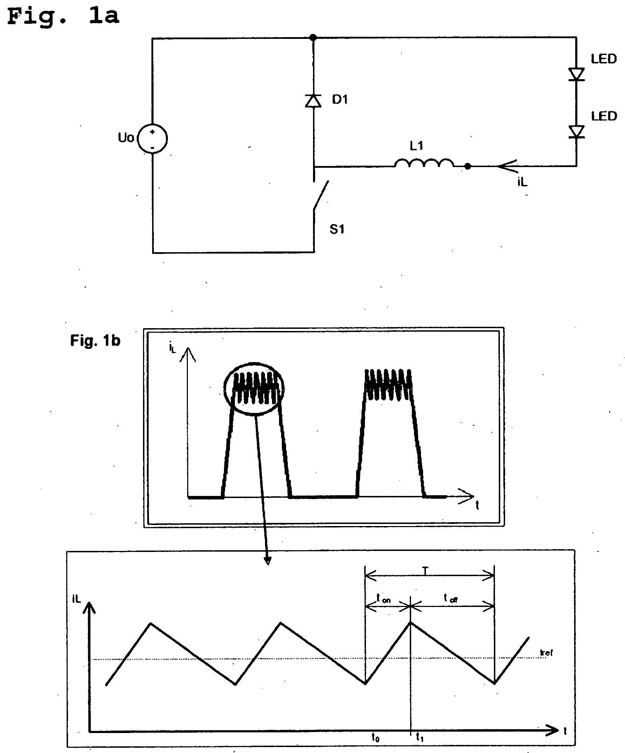

Eine praktische Anforderung an das Betriebsgerät ist, dass es möglichst flexibel und vielseitig eingesetzt werden kann, beispielsweise unabhängig davon, wie viele LEDs als Last tatsächlich angeschlossen sind und betrieben werden sollen. Die Last kann sich zudem während des Betriebs ändern, wenn beispielsweise eine LED ausfällt.
Bei herkömmlichen Technologien werden die LEDs in einem sogenannten 'continuous conduction mode' bzw. nichtlückendem Betrieb betrieben. Dieses Verfahren sei anhand von Figur 1a und Figur 1b näher erläutert (Stand der Technik).

Im in Figur 1a gezeigten Beispiel ist als Grundschaltung ein Tiefsetzsteller (Buck-Converter) für den Betrieb zumindest einer LED (oder mehrerer in Serie geschalteten LEDs) dargestellt, die einen ersten Schalter S1 aufweist. Die Betriebsschaltung wird mit einer Gleichspannung bzw. einer gleichgerichteten Wechselspannung U0 versorgt.

Im eingeschalteten Zustand des ersten Schalters S1 (während der Zeitdauer t_on) wird in der Spule L1 Energie aufgebaut, die sich im ausgeschalteten Zustand des ersten Schalters S1 (Zeitdauer t_off) über zumindest eine LED entlädt. Der sich ergebende zeitliche Stromverlauf ist in Figur 1b abgebildet (Stand der Technik). Dabei sind zwei Pulspakte des PWM dargestellt. Der Stromverlauf innerhalb eines Pulspaket ist zudem vergrößert dargestellt. Aus Gründen der Farbkonstanz soll innerhalb eines Pulspakets die Amplitude des Rippels möglichst gering sein. Dies kann durch geeignete Wahl des Einschaltzeitpunkts t0 und Ausschaltzeitpunkts t1 erfolgen. So können diese Zeitpunkte beispielsweise so gewählt werden, dass der ersten Schalter S1 eingeschaltet wird, wenn der Strom einen bestimmten minimalen Referenzwert unterschreitet und der Schalter ausgeschaltet wird, wenn der Strom einen maximalen Referenzwert überschreitet. Dieses Verfahren hat aber mehrere Nachteile: Zum einen, um einen möglichst geringen Rippel zu erzielen, ist eine rasche Abfolge von Ein- und Auschaltvorgängen notwendig. Die Steigung (positive bzw. negative Flanke) des Stroms ist nämlich nicht vom Betriebsgerät steuerbar und als gegeben zu betrachten, da sie u.a. durch die Induktivität der Spule L1 und durch die Leistungsaufnahme der LEDs bestimmt ist.

Aufgrund von Toleranzen bei den Bauteilen der Betriebsschaltung und auch aufgrund der begrenzten Auflösung der Takteinheiten kann es zu Flickererscheinungen oder anderen Störungen kommen.

Die US 2010/0156319 A1, die als Basis für den Oberbegriff der unabhängigen Ansprüche dient, offenbart eine Betriebsschaltung für ein LED-Beleuchtungssystem. Eine Pulsweitenmodulation kann eingesetzt werden.

Die US 2003/0085749 A1 offenbart eine Betriebsschaltung für Leuchtdioden, bei der eine zweifache Pulsweitenmodulation eingesetzt wird. Durch Veränderung der Niederfrequenzkomponente kann der mittlere Strom durch ein LED-Modul beeinflusst werden.

### Darstellung der Erfindung

Es ist die Aufgabe der vorliegenden Erfindung, eine gegenüber dem Stand der Technik verbesserte Betriebsschaltung für wenigstens eine LED und ein Verfahren zum Betrieb wenigstens einer LED bereitzustellen, welche auf einfache Art und Weise die Konstanthaltung des Stroms und somit der LED-leistung ermöglicht.

Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Gemäß einem ersten Aspekt der Erfindung wird der Betriebsschaltung für wenigstens eine LED eine Gleichspannung oder gleichgerichtete Wechselspannung zugeführt. Eine Versorgungsspannung für wenigstens eine LED wird mittels einer Spüle und einem durch eine Steuereinheit getakteten ersten Schalter bereitstellt, wobei bei eingeschaltetem erstem Schalter in der Spule eine Energie zwischengespeichert wird, die sich bei ausgeschaltetem ersten Schalter über eine Diode und über der wenigstens einen LED entlädt,

Die Steuereinheit steuert den ersten Schalter mit einem Dimm-Signal an, wobei das Dimm-Signal durch eine Verknüpfung eines niederfrequenten Signals und eines hochfrequenten Signals erzeugt wird und diese Verknüpfung vorzugsweise innerhalb der Steuereinheit angeordnet ist. Die Pulsbreite (TON*LF) und optional zusätzlich die Periodendauer des niederfrequenten Signals werden als ganzzahliges Vielfaches der Periodendauer des hochfrequenten Signals gewählt bzw. festgelegt.

Eine Änderung der Helligkeit der LED kann durch eine Änderung der Frequenz des niederfrequenten Signals erfolgen. Die Änderung der Frequenz erfolgt durch Änderung der Ausschaltzeitdauer des niederfrequenten Signals. Vorzugsweise wird dabei die Ausschaltzeitdauer des niederfrequenten Signals erhöht, wenn die Helligkeit verringert werden soll, und es wird die Ausschaltzeitdauer des niederfrequenten Signals verringert, wenn die Helligkeit erhöht werden soll.

Die Steuereinheit kann den Ausschaltzeitpunkt des ersten Schalters so wählen, dass möglichst geringe Schaltverluste auftreten und trotzdem der Stromfluss durch die wenigstens eine LED einen möglichst geringen Rippel aufweist.

Beispielsweise weist die Betriebsschaltung eine erste Sensoreinheit, die ein vom Stromfluss durch den ersten Schalter abhängendes erstes Sensorsignal erzeugt, und/oder eine zweite Sensoreinheit auf, die das Erreichen der Entmagnetisierung der Spule detektiert und ein zweites Sensorsignal erzeugt. Die zweite Sensoreinheit kann beispielsweise auch die Spannung oder den Strom durch die LED erfassen und abhängig davon ein zweites Sensorsignal erzeugen. Die Sensorsignale werden an die Steuereinheit zugeführt und bearbeitet.

Beispielsweise verwendet die Steuereinheit ein Signal der ersten Sensoreinheit oder ein Signal der zweiten Sensoreinheit oder eine Kombination von beiden Signalen zur Festlegung des Ein- und / oder Ausschaltzeitpunkts und / oder des Tastverhältnisses des ersten Schalters.

Beispielsweise schaltet das Steuereinheit den ersten Schalter aus, wenn der Strom durch den ersten Schalter eine maximalen Referenzwert überschreitet und schaltet optional zu dem Zeitpunkt wieder ein, wenn der Strom durch die LED einen minimalen Referenzwert unterschreitet, beispielsweise wenn die Spule entmagnetisiert ist und/oder die Diode sperrt. Der Zeitpunkt des Wiedereinschaltens kann auch durch eine vorgegebene Frequenz festgelegt sein.

In einer bevorzugten Ausführungsform der Erfindung ist die erste Sensoreinheit ein Messwiderstand (Shunt).
In einer weiteren Ausführungsform der Erfindung ist die zweite Sensoreinheit eine induktiv an die Spule gekoppelten Sekundärwicklung oder ein Hallsensor oder die zweite Sensoreinheit erkennt das Erreichen der Entmagnetisierung der Spule, indem sie die Spannung oberhalb des ersten Schalters mittels eines (ohmschen) Spannungsteilers überwacht.

In einer weiteren Ausführungsform der Erfindung wird die Betriebsschaltung für wenigstens eine LED durch eine resonante oder quasi-resonante Schaltung gebildet. Eine Versorgungsspannung für wenigstens eine LED wird mittels zumindest einem durch eine Steuereinheit getakteten ersten Schalter bereitstellt, wobei der erste Schalter im eingeschalteten Zustand einen Resonanzkreis speist, der vorzugsweise zumindest eine Spule als Induktivität aufweist. In dem Resonanzkreis, vorzugweise in der Spule wird eine Energie zwischengespeichert, die sich bei ausgeschaltetem erstem Schalter über eine Diode und über der wenigstens einen LED entlädt. Zwischen die Diode und die LED kann auch ein Kondensator als Glättungskondensätor geschaltet sein, der direkt oder indirekt parallel zu der LED angeordnet ist. Der Resonanzkreis kann auch einen Resonanzkondensator aufweisen. Die Spule kann auch Teil eines Transformators sein oder es kann zusätzlich zu der Spule auch ein Transformator in dem Resonanzkreis angeordnet sein. Der erste Schalter kann auch Teil eines Wechselrichters sein, beispielsweise einer alternierend getakteten Halbbrücke.

Die Erfindung betrifft auch ein Verfahren zur Ansteuerung wenigstens einer LED.

Weitere bevorzugte Ausführungsformen und Weiterbildungen der Erfindung sind Gegenstand weiterer Unteransprüche.

Die vorliegende Erfindung wird nachfolgend anhand bevorzugter Ausführungsbeispiele unter Bezugnahme auf die beigefügten Zeichnungen näher beschrieben.
Figur 1a zeigt eine Schaltungsanordnung gemäß dem bekannten Stand der Technik
Figur 1b zeigt ein Diagram mit dem zeitlichen Verlauf des LEDstroms in der Schaltungsanordnung von Figur 1a (Stand der Technik)
Figur 2a zeigt ein erstes Beispiel einer Betriebsschaltung (Buck) für LEDs
Figur 2b zeigt ein Diagram, das zeitabhängige Stromverläufe und Steuersignale in der in Fig 2a dargestellten Schaltungsanordnung darstellt
Figur 3 und Figur 4 zeigen spezielle Ausführungsformen einer Betriebsschaltung
Figur 5 zeigt eine Abwandlung der Schaltung von Figur 2a (Buck-Boost)
Figur 6 zeigt eine weitere spezielle Ausführungsform einer Betriebsschaltung
Figur 7 zeigt ein erstes Beispiel einer erfindungsgemäßen Ausführung einer Steuereinheit SR
Figur 8 a zeigt ein Beispiel einer erfindungsgemäßen Ansteuerung einer Betriebsschaltung für LEDs
Figur 8b zeigt ein Beispiel einer Ansteuerung einer Betriebsschaltung für LEDs gemäß dem Stand der Technik
Figur 9 zeigt eine weitere Ausführungsform einer Betriebsschaltung

Figur 1a und Figur 1b zeigen den Stand der Technik.

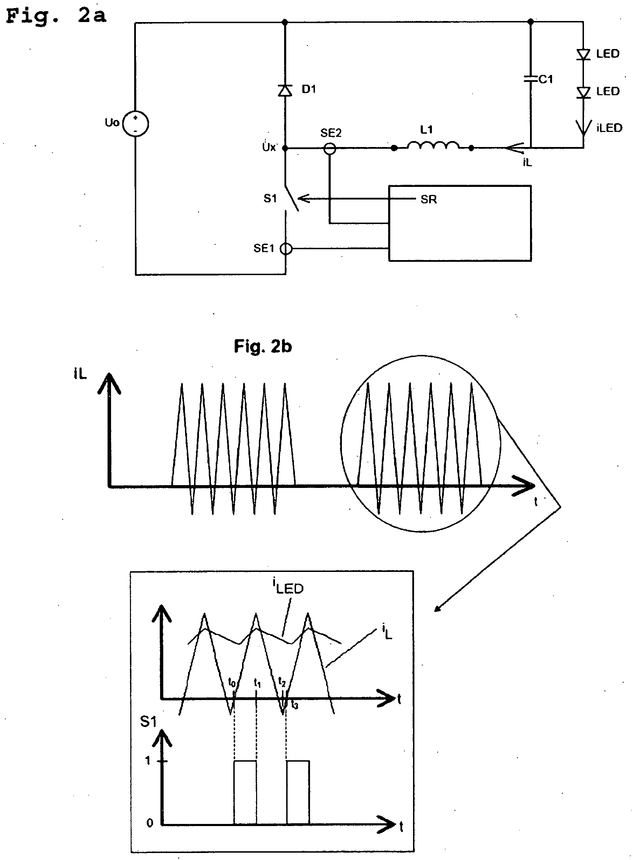

Die in Figur 2a dargestellte Schaltungsanordnung dient zum Betrieb von wenigstens einer (oder mehrerer in Serie und / oder parallel geschaltenen) LED. Im dargestellten Beispiel sind beispielsweise zwei LEDs in Serie geschaltet, es können natürlich auch nur eine oder mehrere LEDs sein.

Die LED bzw. die seriell und / oder parallel geschaltenen LEDs werden im Folgenden auch LED-strecke genannt. Ein Vorteil der vorliegenden Erfindung ist, dass sich die Betriebsschaltung sehr flexibel an die Art und Anzahl der seriell verbundenen LEDs anpasst. Der Schaltung wird eine Gleichspannung U0 zugeführt, die natürlich auch eine gleichgerichtete Wechselspannung sein kann. Vorzugsweise ist die Gleichspannung U0 aber eine möglichst konstante Gleichspannung, sie kann jedoch einen geringen Wechselstromanteil als Rippel aufweisen. Die LEDs sind in Serie mit einer Spule L1 und einem ersten Schalter S1 verbunden.

Zudem weist die Schaltungsanordnung eine Diode D1 (die Diode D1 ist parallel zu den LEDs und der Spule L1 geschaltet) und optional einen zu den LEDs parallel geschalteten Kondensator C1 auf. Im eingeschalteten Zustand des ersten Schalters S1 fließt Strom durch die LEDs und durch die Spule L1, die dadurch magnetisiert wird. Im ausgeschaltenen Zustand des ersten Schalters S1 entlädt sich die im Magnetfeld der Spule gespeicherte Energie in Form eines Stroms über die Diode D1 und die LEDs. Parallel dazu wird am Beginn des Einschaltens des ersten Schalters S1 der Kondensator C1 geladen.
Während der Ausschaltphase des ersten Schalters S1 (Freilaufphase) entlädt sich der Kondensator C1 und trägt zum Stromfluss durch die LED-strecke bei. Bei geeigneter Dimensionierung des Kondensators C1 führt dies zu einer Glättung des Stroms durch die LEDS.

Als erster Schalter S1 wird vorzugsweise ein Feldeffekttransistor oder auch Bipolartransistor verwendet. Der erste Schalter S1 wird hochfrequent geschaltet, typischerweise in einem Frequenzbereich von über 10 kHz, vorzugsweise über 50kHz.
Ein Vorteil dieser Betriebsart ist, dass der erste Schalter S1 im Betrieb geschont wird, wenn er, wie später ausgeführt, vorzugsweise dann eingeschaltet wird, wenn die an ihm anliegende Leistung nahezu null ist. Beim Stand der Technik dagegen, wo die Schaltvorgänge unter hoher Leistung ablaufen, muss für den ersten Schalter S1 ein hochwertiges Bauelement mit sehr kurzer Schaltdauer eingesetzt werden, um die Schaltverluste in einem tolerierbaren Rahmen zu halten.
Ein Vorteil dieser Betriebsart ist, dass für den ersten Schalter S1 und die Diode D1 durchaus auch ein vergleichsweise billigeres Bauelement mit vergleichsweise etwas längerer Schaltdauer oder längerer Ausräumzeit eingesetzt werden kann.

In der Schaltung von Figur 2a ist weiters eine Steuereinheit SR vorgesehen, die zur Regelung der LED-leistung die Taktung des ersten Schalters S1 vorgibt.

Die Steuereinheit SR verwendet zur Festlegung des genauen Einschalt- und Ausgangszeitpunkts des ersten Schalters S1 als Eingangsgrößen Signale von einer ersten Sensoreinheit SE1 und/oder Signale von einer zweiten Sensoreinheit SE2.

Die erste Sensoreinheit SE1 ist in Serie zum ersten Schalter S1 angeordnet und erfasst den Stromfluss durch den ersten Schalter S1. Dies dient zur Überwachung des Stromflusses durch den ersten Schalter S1. Übersteigt der Stromfluss durch den ersten Schalter S1 einen bestimmten maximalen Referenzwert, so wird der erste Schalter S1 ausgeschaltet.
In einer vorteilhaften Ausführungsform kann es sich bei der ersten Sensoreinheit SE1 beispielsweise um einen Messwiderstand (Shunt oder Strommesswiderstand) handeln.

Zur Überwachung des Stromflusses kann nun der Spannungsabfall am Messwiderstand (Shunt) abgegriffen werden und beispielsweise mittels eines Komparators mit einem Referenzwert verglichen werden.

Überschreitet der Spannungsabfall am Messwiderstand (Shunt) einen bestimmten Wert, so wird der erste Schalter S1 abgeschaltet.

Die zweite Sensoreinheit SE2 ist innerhalb des Stromzweiges, der während der Freilaufphase vom Strom durchflossen wird, angeordnet, vorzugsweise in der Nähe oder an der Spule L1 oder auch in Serie oder parallel zu der LED (beispielsweise als Stromspiegel). Mit Hilfe der zweiten Sensoreinheit SE2 kann die Steuereinheiteinheit SR einen geeigneten Zeitpunkt für den Einschaltzeitpunkt des ersten Schalters S1 festlegen.

In einer möglichen Betriebsweise wird der ersten Schalter S1 vorzugsweise dann eingeschaltet, wenn der Strom durch die Spule L1 zum ersten Mal null ist oder zumindest sehr gering ist, dass heißt vorzugsweise in dem Zeitbereich, wenn die Diode D1 am Ende der Freilaufphase sperrt. In diesem Fall liegt zum Einschaltzeitpunkt des ersten Schalters S1 ein möglichst geringer Strom am Schalter S1 an.

Durch Erkennen des Stromnulldurchgangs durch die Spule L1 wird ein nahezu verlustfreies Schalten ermöglicht. Vorzugsweise zeigt der Strom durch die LEDs nur geringe Welligkeit und schwankt nicht stark. Dies ist auf die glättende Wirkung des zu den LEDs parallel geschalteten Kondensators C1 zurückzuführen. Während der Phase eines geringen Spulenstroms übernimmt der Kondensator C1 die Speisung der LED.

Die Ausschaltdauer des Schalters S1 kann aber auch durch eine fix vorgegebene Frequenz vorgegeben sein. In diesem Fall ergibt sich die Ausschaltdauer des Schalters S1 aus der verbleibenden Restzeit der Periodendauer der Taktfrequenz des Schalters S1 (im weiteren auch als hochfrequentes Signal bezeichnet), also dem Differenz von Periodendauer und Einschaltzeitdauer des Schalters S1.

Die einzelnen Stromverläufe und der optimale Einschaltzeitpunkt des ersten Schalters S1 sollen anhand des Diagrams in Figur 2b näher erläutert werden.

Analog zu Diagram in Figur 1b ist der zeitliche Verlauf des Stroms i_L über zwei Pulspakete dargestellt.

Die vergrößerte Darstellung zeigt den Stromverlauf innerhalb eines PWM Pulspaketes: Es ist der zeitliche Verlaufs des Stroms i_L durch die Spule L1, der zeitliche Verlauf des Stroms i_LED durch die LEDs und der zeitliche Verlauf des Zustand des ersten Schalters S1 aufgetragen (Im Zustand 0 ist der erste Schalter S1 ausgeschaltet, im Zustand 1 ist der Schalter geschlossen; die Signale für den Zustand des Schalters S1 entsprechen dem Ansteuersignal (also am Gate) des Schalters S1). Zum Zeitpunkt t_0 wird der erste Schalter S1 geschlossen und es beginnt ein Strom durch die LED und die Spule L1 zu fließen. Der Strom i_L zeigt einen Anstieg gemäß einer Exponentialfunktion, wobei im hier interessierenden Bereich ein quasi-linearer Anstieg des Stroms i_L zu erkennen ist.
i_LED unterscheidet sich von i_L dadurch, dass ein Teil des Stroms i_L zur Ladung des Kondensators C1 beiträgt. Das Öffnen des ersten Schalters S1 zum Zeitpunkt t_1 (beispielsweise wenn ein gewünschter maximaler Referenzwert erreicht ist) hat zur Folge, dass sich die im Magnetfeld der Spule gespeicherten Energie über die Diode D1 und die LEDs bzw. den Kondensator C1 entlädt. Der Strom i_L fließt in die gleiche Richtung weiter, nimmt aber kontinuierlich ab und kann sogar einen negativen Wert erreichen. Ein negativer Strom (d.h. ein Stromfluss mit umgekehrter Richtung) ist solange vorhanden, solange die Ladungsträger, die zuvor in der leitend gepolten Diode D1 angereichert wurden, aus der Sperrschicht der Diode D1 ausgeräumt sind.

Der Strom i_LED hingegen nimmt nur schwach ab und wird aufrechterhalten, da der Kondensator C1 glättend wirkt. Zum Zeitpunkt t_2 sperrt die Diode. Der Strom i_L nimmt ab (ist aber weiter negativ) und geht gegen null. In dieser Phase werden parasitäre Kapazitäten an der Diode D1 und weitere parasitäre Kapazitäten in der restlichen Schaltung umgeladen.

Die Spannungen am Knotenpunkt Ux oberhalb des ersten Schalters S1 und an der Spule L1 ändern sich in diesem Zeitraum sehr rasch. Die Spannung am Knotenpunkt Ux fällt auf einen niedrigen Wert ab (aufgrund des Sperrens der Diode D1). Ein vorteilhafter Wiedereinschaltzeitpunkt t_3 für den ersten Schalter S1 ist nun gegeben, wenn der Strom i_L den Nulldurchgang, oder zumindest die Nähe des Nulldurchgangs, erreicht. Zu diesem Zeitpunkt ist die Spule L1 nicht bzw. kaum magnetisiert.
Der ersten Schalter S1 kann zu diesem Zeitpunkt mit sehr geringen Verlusten eingeschaltet werden, da kaum Strom durch die Spule L1 fließt. Ein Wiedereinschalten ist aber auch bereits zum Zeitpunkt t_2 oder kurz vorher möglich, da der Strom durch die Spule L1 in diesem Zeitbereich sehr niedrig ist.

Zur Detektion des vorteilhaften Einschaltzeitpunkts für den ersten Schalter S1 dient nun eine zweite Sensoreinheit SE2. In einer ersten Ausführungsform kann beispielsweise der Strom i_L durch die Spule L1 erfasst werden. Dies erfordert aber relativ aufwendige Schaltungen. Der Strom i_L durch die Spule L1 kann beispielsweise mittels eines Hallsensors erfasst werden. Zusätzlich oder alternativ können daher weitere/andere Größen herangezogen werden, die zur Detektion eines vorteilhaften Einschaltzeitpunkts geeignet sind.

In einer weiteren Ausführungsform kann beispielsweise der Magnetisierungszustand der Spule L1 erfasst werden. Es kann sich bei der zweiten Sensoreinheit SE2 beispielsweise um eine Sekundärwicklung L2 an der Spule L1 handeln, die die Spannung an der Spule L1 abgreift. Die Überwachung des zeitlichen Spannungsverlaufs an der Spule L1 (insbesondere des 'Einbruchs' kurz nach Sperren der Diode D1 nach dem Zeitpunkt t_2) ermöglicht eine Aussage über den vorteilhaften Wiedereinschaltzeitpunkts des ersten Schalters S1. In einer einfachen Ausführungsvariante würde ein Komparator reichen, der das Erreichen der Entmagnetisierung (und somit den Nulldurchgang) anhand des Über- bzw. Unterschreitens eines Schwellwerts erkennen kann.

Anstatt oder ergänzend zur Spannungsüberwachung an der Spule L1 kann beispielsweise die Spannung am Knotenpunkt Ux oberhalb des ersten Schalters S1 überwacht werden. Die Spannung am Knotenpunkt Ux fällt beim Sperren der Diode von einem hohen Wert signifikant ab auf einen niedrigen Wert. Das Signal zum Wiedereinschalten des ersten Schalters S1 kann daher bei Unterschreiten der Spannung Ux unter einem gewissen Schwellwert ausgelöst werden. Die Steuereinheit SR schaltet den ersten Schalter S1 zu dem Zeitpunkt wieder ein, wenn die Spule L1 entmagnetisiert ist und/oder die Diode D1 sperrt. Die zweite Sensoreinheit SE2 kann dabei aus einer induktiv an die Spule L1 gekoppelten Sekundärwicklung L2 oder aus einem Spannungsteiler (R1, R2) am Knotenpunkt Ux bestehen.

Für den Betrieb der Betriebsschaltung und die Einstellung des Stromes durch die LED sind aber auch andere Regelmechanismen denkbar, so kann beipielsweise das Unterschreiten eines vorgegebenen Schwellwertes für den LED Strom eine Bedingung für das Wiedereinschalten sein. Es wäre auch eine Regelung nur aufgrund des während der Einschaltphase des Schalters S1 erfassten Stromes durch den Messwiderstand (Shunt) RS möglich, wobei in diesem Fall beispielsweise die Einschaltzeit des Schalters S1 bei fixer Taktfrequenz verändert werden kann oder es kann der LED Strom anhand des über die Zeit gemittelten Stromes geregelt werden.

Die Steuereinheit SR verwendet die Information von der ersten Sensoreinheit SE1 und/oder der zweiten Sensoreinheit SE2 zur Festlegung des Aus- und Einschaltzeitpunkts des ersten Schalter S1 und generiert somit ein hochfrequentes Signal zur direkten oder indirekten Regelung des LED Stromes. Es ist auch eine Leistungsregelung mittels der Auswertung der der Betriebsschaltung zugeführten Leistung denkbar.

Die Einstellung der Helligkeit kann durch Einstellung der zeitlich gemittelten LEDleistung durch die Steuereinheit SR erfolgen, vorzugsweise in Form von niederfrequenten PWM-Signalen. Die Frequenz des niederfrequenten PWM Signals zur Einstellung der Helligkeit liegt typischerweise in der Größenordnung von 100 - 1000 Hz.

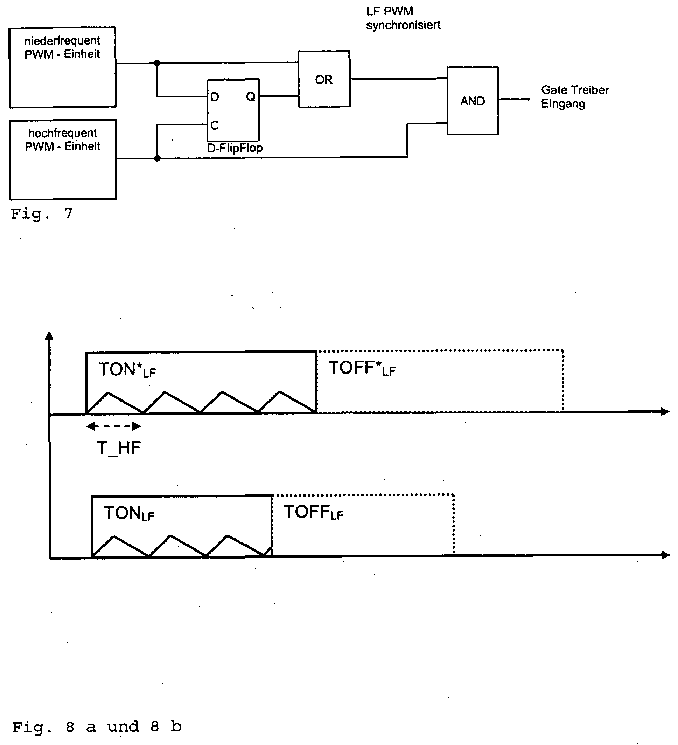

Die Fig. 8b zeigt ein Beispiel nach dem Stand der Technik, wo ein Pulspaket (wie in Fig. 1b schon erläutert) von hochfrequenten Pulsen durch das Ende der Pulsbreite des niederfrequenten Pulses abgeschnitten wird, und zwar zu einem Zeitpunkt, wo eine Periodendauer eines hochfrequenten Pulsen nicht vollendet wird. Die Pulsbreite des niederfrequenten Pulses bestimmt dabei die Breite des Pulspaketes. Es kann ein derartiges Abschneiden sowohl während einer fallenden als auch einer steigenden Flanke eines hochfrequenten Pulses auftreten.

Das Beispiel der Fig. 7 zeigt die erfindungsgemäße Ansteuerung des Schalter S1 durch die Steuereinheit SR, wie es beispielsweise auf die Schaltung nach dem Beispiel der Fig. 2 anwendbar ist. In der Fig. 8 a sind das niederfrequente Signal (LF) und das hochfrequente Signal (HF) sowie das sich ergebende Dimm-signal (FET) in ihrem beispielhaften zeitlichen Verlauf dargestellt, die genaue Funktionsweise wird im Folgenden anhand des Beispiels der Fig. 7 erläutert.

Eine mögliche Implementierung der Erfindung innerhalb einer Steuereinheit SR ist in Fig. 7 dargestellt. Die Steuereinheit SR steuert den ersten Schalter S1 mit einem Dimm-Signal an, wobei das Dimm-Signal durch eine Verknüpfung eines niederfrequenten Signals und eines hochfrequenten Signals erzeugt wird.
Das niederfrequente Signal und das hochfrequente Signal können intern in der Steuereinheit SR verknüpft sein und an einem Ausgang der Steuereinheit SR ausgegeben werden.

Das niederfrequente Signal, welches von einer niederfrequenten PWM-Einheit (Low frequency PWM-Unit) erzeugt werden kann, und das hochfrequente Signal, welches von einer hochfrequenten PWM-Einheit (High frequency PWM-Unit) erzeugt werden kann, können über ein Koppelglied verknüpft sein. Das Koppelglied kann durch eine logische Verknüpfung gebildet sein. Im Beispiel der Fig. 7 wird das aas niederfrequente Signal, welches von einer niederfrequenten PWM-Einheit (Low frequency PWM-Unit) erzeugt wird, dem D Eingang eines D-FlipFlops zugeführt. Das hochfrequente Signal, welches von einer hochfrequenten PWM-Einheit (High frequency PWM-Unit) erzeugt wird, wird einem C Eingang des D-FlipFlops zugeführt. Das am Ausgang Q anliegende resultierende Signal des D-FlipFlops wird einer ODER Verknüpfung zugeführt. Auch das niederfrequente Signal, welches von einer niederfrequenten PWM-Einheit (Low frequency PWM-Unit) erzeugt wird, wird der ODER Verknüpfung zugeführt. Das Ausgangssignal der ODER Verknüpfung wird einer UND Verknüpfung zugeführt. Der UND Verknüpfung wird auch hochfrequente Signal, welches von einer hochfrequenten PWM-Einheit (High frequency PWM-Unit) erzeugt wird, zugeführt. Das sich am Ausgang der UND Verknüpfung ergebende Signal bildet das Dimm-Signal, welches dem Gate Treiber Eingang (Gate Driver Input) der Steuereinheit SR und somit dem Gate des Schalters S1 zugeführt wird.

Die Verknüpfung von niederfrequentem Signal und hochfrequentem Signal kann aber auch über eine Berechnung der Parameter für das niederfrequente Signal anhand der Parameter wie der Periodendauer (T_HF) des hochfrequenten Signals erfolgen, beispielsweise bei einem digitalen System.

Das niederfrequente Signal und das hochfrequente Signal werden vorzugsweise intern zu dem Dimm-Signal verknüpft und das Dimm-Signal an einem Ausgang der Steuereinheit (SR) ausgegeben. Die Steuerenheit (SR) weist vorzugsweise Mittel zur Verknüpfung des niederfrequenten Signal und des hochfrequenten Signals auf, um die Pulsbreite (TON*LF) des niederfrequenten Signals als ganzzahliges Vielfaches der Periodendauer (T_HF) des hochfrequenten Signals zu wählen bzw. festzulegen.

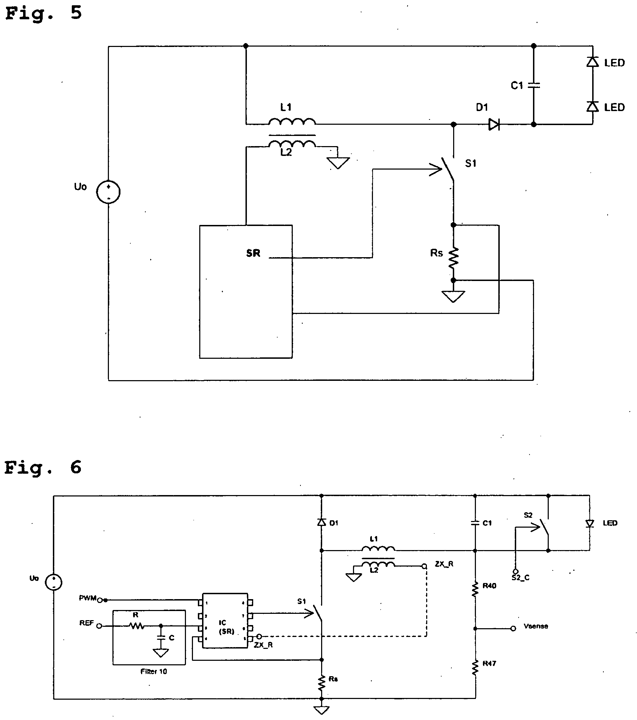

Es wäre auch möglich, dass ein zu der Steuereinheit (SR) externer Microcontroller das niederfrequente Signal erzeugt, indem der Microcontroller eine niederfrequenten PWM-Einheit (Low frequency PWM-Unit) aufweist. Dieses niederfrequente Signal kann der Steuereinheit SR zugeführt werden, wobei die Steuereinheit SR nur die hochfrequente PWM-Einheit (High frequency PWM-Unit) zur Erzeugung des hochfrequenten Signales und das Koppelglied zur Verknüpfung von niederfrequentem Signal und hochfrequentem Signal aufweisen kann. Ein derartiges System ist als Beispiel bei der Fig. 6 erläutert.

Beim Dimmen der LED kann die Frequenz des niederfrequenten Signals geändert werden. Die Änderung der Frequenz des niederfrequenten Signals kann abhängig von der Änderung der Pulsbreite (TON*LF) des niederfrequenten Signals gewählt werden. Die Änderung der Frequenz ergibt sich dabei aus einer Anpassung der Ausschaltzeitdauer des niederfrequenten Signals. Vorzugsweise wird die Länge der Ausschaltzeitdauer des niederfrequenten Signals erhöht, um die Helligkeit bzw. das Dimmlevel zu verkleinern.

Die Änderung der Frequenz und der Pulsbreite (TON*LF) des niederfrequenten Signals kann derart erfolgen, dass das Einschaltverhältnis des niederfrequenten Signals bei konstantem Dimmlevel bzw. Helligkeitspegel konstant bleibt.

Vorzugsweise ist das niederfrequente Signal ein niederfrequent gepulstes, insbesondere PWM-Signal, insbesondere im Bereich von etwa 100 Hz bis 1000 Hz, vorzugweise im Bereich von 500 Hz bis 1000 Hz. Eine zum Dimmen bzw. Ändern der Helligkeit erforderliche Änderung der Frequenz des niederfrequenten Signals kann dabei im Bereich von beispielsweise 100 Hz bis 200 Hz liegen. Vorzugsweise ist das hochfrequente Signal ein hochfrequent gepulstes, insbesondere PWM-Signal, beispielsweise im Bereich von etwa 50 kHz oder darüber.

Aufgrund der Verknüpfung des niederfrequenten Signals mit dem hochfrequenten Signal kann es erforderlich sein, dass bei einer dauernden Änderung der Frequnez des hochfrequenten Signals eine dauernde Erfassung und Anpassung des niederfrequenten Signals hinsichtlich seiner Pulsbreite erfolgen muß.

Aufgrund der Verknüpfung des niederfrequenten Signals mit dem hochfrequenten Signal kann es erforderlich sein, dass beim Dimmen bzw. Ändern der Helligkeit die Pulsbreite des niederfrequenten Signals nur inkrementell geändert wird, wobei die Inkrementlänge eine vollständige Periodendauer oder ein Vielfaches der vollständigen Periodendauer des hochfrequenten Signals beträgt. Eine genaue Abstufung der Anpassung der Helligkeit bzw. des Dimmlevels kann dann über die Länge der Ausschaltzeitdauer des niederfrequenten Signals erfolgen.

Das Dimm-Signal, über welches die Helligkeit der LED eingestellt wird, wird also aus Pulspaketen gebildet, vorzugsweise als ein resultierendes gepulstes, insbesondere PWM-Signal, wobei die Pulspakete durch längere Pausen unterbrochen sind.

Das Dimm-signal kann von einer von außen, beispielsweise durch einen Nutzer, vorgegebenen Helligkeitsvorgabe abhängig sein. Diese Helligkeitsvorgabe kann durch das zugeführte niederfrequente Signal

Das niederfrequente Signal kann vom angestrebten Dimmlevel der LED abhängig sein. Das niederfrequente Signal kann auch von einem weiteren integrierten Steuerschaltkreis wie beispielsweise einem Microcontroller, der als zentraler Controller angeordnet ist, vorgegeben werden und nur von der Steuereinheit SR durchgeschleift werden. Das niederfrequente Signal kann auch von einem weiteren Microcontroller, der als zentraler Controller angeordnet ist, vorgegeben werden und muß nicht zwangsläufig von der Steuereinheit SR ausgegeben oder durchgeschleift werden.

Das hochfrequente Signal kann vom Strom und / oder der Spannung durch die LED abhängig sein. Das hochfrequente Signal ist von einer Regelschleife abhängig, wobei abhängig von zumindest einem vorgegebenen Sollwert für einen Strom und / oder eine Spannung innerhalb der Betriebsschaltung und dem Vergleich mit einem Istwert zumindest der erste Schalter S1 durch eine hochfrequente Ansteuerung getaktet wird. Beispielsweise kann die Betriebsschaltung im hysteretischen Modus betrieben werden, wobei der Schalter S1 abhängig vom Erreichen von Schwellwerten ein- und ausgeschaltet wird (z.B. bei einem Einschalter des Schalters S1 bei Erreichen des Nullpunkts des Stromes durch die Spule L1 oder Unterschreiten eines unteren Grenzwertes für den LED Strom und Ausschalten des Schalters S1 bei Überschreiten eines Stroms durch den Schalter S1). Gemäß der Erfindung muß bei dieser Regelschleife keine Rücksicht auf die aktuelle Helligkeit der LED genommen werden.

Somit ergibt sich durch die Erfindung der Vorteil, dass die Regelschleife für die Regelung des Stromes durch die LED von der Vorgabe der Helligkeit entkoppelt werden kann und trotzdem eine Ansteuerung des Schalters über ein einzelnes Ansteuersignal möglich ist (wobei die Verknüpfung vom hochfrequenten Signal der Regelschleife mit dem niederfrequenten Signal für die Helligkeit vorzugsweise intern der Steuereinheit SR verknüpft wird).

Die Regelschleife für die Regelung des Stromes durch die LED und somit das hochfrequente Signal kann auch dazu genutzt werden, um auftretende Schwankungen in der Gleichspannung U0 zu kompensieren. Beispielsweise kann die Gleichspannung U0 einen Rippel mit doppelter Netzspannung aufweisen, wenn die Gleichspannung U0 beispielsweise von einem 230V Netz mit 50 Hz Netzfrequenz über einen Gleichrichter und eine optional zwischengeschaltete Leistungsfaktorkorrekturschaltung gespeist wird. Die Gleichspannung U0 kann in diesem Fall beispielsweise einen 100 Hz Rippel mit ungefähr 10% Amplitude im Vergleich zur Amplitude des Gleichspannungsanteils aufweisen. Die Betriebsschaltung mit ihrer Regelschleife kann nunmehr dazu ausgelegt sein, dass das hochfrequente Signal so angepasst wird, dass dieser 100 Hz Rippel nicht an die LED weitergegeben wird sondern abgemildert wird. Dies kann beispielsweise direkt durch eine schnelle Regelschleife oder auch durch eine Weitergabe der Information über die aktuelle Amplitude der Gleichspannung U0 erfolgen, wobei abhängig von der aktuellen Amplitude der Gleichspannung U0 die Frequenz des hochfrequenten Signals angepasst werden kann. Eine derartige Steuerung wird auch als , Feed Forward' Steuerung bezeichnet.

Da sich die Periodendauer des hochfrequenten Signals somit synchron zu der Amplitude des Rippels der Gleichspannung U0 (also der Schwankung der Gleichspannung U0) ändert und dies andauernd erfolgt, kann bei der Festlegung der Pulsbreite (TON*LF) des niederfrequenten Signals auch die aktuelle Amplitude der Gleichspannung U0 berücksichtigt werden. Es kann auch in Kenntnis des Verlaufs der Schwankung der Gleichspannung U0 eine Anpassung der Pulsbreite (TON*LF) des niederfrequenten Signals abhängig vom aktuellen Verlauf der Gleichspannung U0 erfolgen. Es kann also bei der Festlegung der Pulsbreite (TON*LF) des niederfrequenten Signals auch die aktuelle Amplitude der Gleichspannung U0 und / oder der aktuelle Verlauf der Gleichspannung U0 berücksichtigt werden.

Durch die Erfindung wird somit sichergestellt, dass ein Pulspaket von hochfrequenten Pulsen nicht durch das Ende der Pulsbreite des niederfrequenten Pulses abgeschnitten wird, sondern es wird die Pulsbreite des niederfrequenten Pulses an die Dauer des Pulspaketes aus hochfrequenten Pulsen angepasst.

Die Steuereinheit SR kann durch einen Microcontroller, FPGA, PAL oder auch einen anwendungsspezifischen integrierten Schaltkreis (ASIC) gebildet werden.

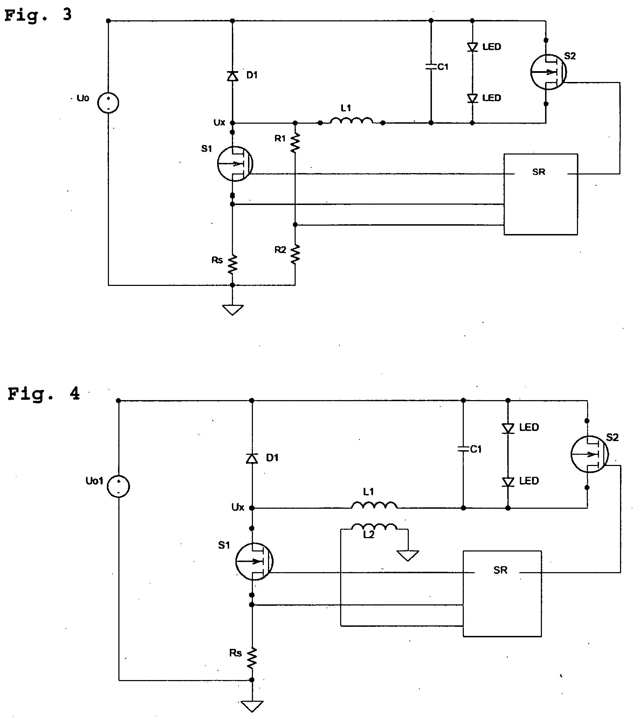

Die erfindungsgemäße Ansteuerung ist nicht auf die Topologie oder Schaltungsanordnung der Fig. 3 begrenzt, es sind genauso Implementierungen nach den Schaltungen der Fig. 1 bis 6 möglich. Beispielsweise kann diese Erfindung bei einem Tiefsetzsteller, Hochsetzsteller, Inverter (Buck-Boost-Konverter), isolierten Sperrwandler (Flyback-Konverter), Sepic-Wandler, Halbbrückenwandler oder auch anderen Topologien und Schaltungsanordnungen angewendet werden.

Die Erfindung betrifft grundsätzlich Betriebsschaltungen für wenigstens eine LED, die mittels eines Schaltreglers über zumindest einen getakteten ersten Schalter S1 versorgt werden, wobei über die Frequenz und / oder das Einschaltverhältnis des getakteten Schalters S1 der Strom durch die LED beeinflusst wird, und die Frequenz und / oder das Einschaltverhältnis des getakteten Schalters S1 durch eine Steuereinheit SR mittels eines Dimm-Signal als Ansteuersignal vorgegeben wird, wobei das Dimm-Signal durch eine Verknüpfung eines niederfrequenten Signals und eines hochfrequenten Signals erzeugt wird. Das niederfrequente Signal (LF) und das hochfrequente Signal (HF) werden vorzugsweise über ein Koppelglied verknüpft. Die Steuereinheit SR kann die Pulsbreite (TON*LF) und optional zusätzlich die Periodendauer des niederfrequenten Signals als ganzzahliges Vielfaches der Periodendauer des hochfrequenten Signals wählen. Das Koppelglied stellt somit ein Beispiel für Mittel zur Verknüpfung des niederfrequenten Signals (LF) und des hochfrequenten Signals (HF) dar.

Die Beispiele der Fig. 7 oder 8 (und die anderen natürlich auch) kann dahingehend erweitert werden, dass mehrere Betriebsschaltungen gemäß der Figuren 7 oder 8 vorhanden sind. Die Steuereinheiten SR der einzelnen Betriebsschaltungen können von einem gemeinsamen Microcontroller aus angesteuert werden. Es wäre aber auch möglich, die Funktion der zentralen Ansteuerung der einzelnen Betriebsschaltungen durch einen zentralen Controller und die Regelung des Betriebs der Betriebsschaltungen durch die Steuereinheiten SR in einem gemeinsamen Microcontroller anzuordnen. Die einzelnen Betriebsschaltungen können beispielsweise LED-stränge unterschiedlicher Wellenlänge oder Farbe ansteuern. Die Ansteuerung des Microcontrollers kann über eine Schnittstelle (drahtlos oder leitungsgebunden) erfolgen. Dabei können Steuersignale zum Einstellen der Helligkeit oder Farbe oder auch Statusinformationen über die Schnittstelle übertragen werden.

Die Erfindung ermöglicht somit auch ein Verfahren zur Ansteuerung wenigstens einer LED, wobei die Steuereinheit SR den Schalter S1 mit einem Dimm-Signal ansteuert, und wobei das Dimm-Signal durch eine Verknüpfung eines niederfrequenten Signals und eines hochfrequenten Signals erzeugt wird. Die Pulsbreite (TON*LF) und optional zusätzlich die Periodendauer des niederfrequenten Signals wird dabei als ganzzahliges Vielfaches der Periodendauer des hochfrequenten Signals gewählt.

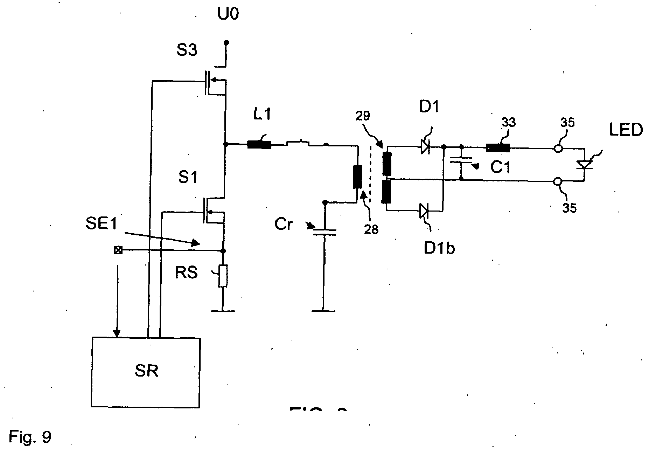

In einer weiteren Ausführungsbeispiel kann die Betriebsschaltung für wenigstens eine LED durch eine resonante oder quasi-resonante Schaltung gebildet werden (Fig. 9). Eine Versorgungsspannung für wenigstens eine LED wird mittels zumindest einem durch eine Steuereinheit getakteten ersten Schalter S1 bereitstellt, wobei der erste Schalter S1 im eingeschalteten Zustand einen Resonanzkreis speist, der vorzugsweise zumindest eine Spule L1 als Induktivität aufweist. In dem Resonanzkreis, vorzugweise in der Spule L1 wird eine Energie zwischengespeichert, die sich bei ausgeschaltetem erstem Schalter S1 über eine Diode D1 und über der wenigstens einen LED entlädt. Zwischen die Diode D1 und die LED kann auch ein Kondensator C1 als Glättungskondensator geschaltet sein, der direkt oder indirekt parallel zu der LED angeordnet ist. Der Resonanzkreis kann auch einen Resonanzkondensator Cr aufweisen. Die Spule L1 kann auch Teil eines Transformators sein oder es kann zusätzlich zu der Spule auch ein Transformator (28, 29) in dem Resonanzkreis angeordnet sein. Der erste Schalter S1 kann auch Teil eines Wechselrichters sein, beispielsweise einer alternierend getakteten Halbbrücke mit den beiden Schaltern S1 und S3. In dem Beispiel der Fig. 9 ist beispielhaft ein sogenannter LLC-Konverter (serienresonanter isolierter LLC -Halbbrückenwandler) dargestellt. Die Halbbrücke mit den alternierend getakteten Schaltern S1 und S3 kann gemäß der Erfindung mit dem Dimm-Signal angesteuert werden, wobei die beiden Schalter S1 und S3 jeweils mit 50% Tastverhältnis mit hoher Frequenz während der Pulsbreite (TON*LF) des niederfrequenten Signals aktiviert werden. Die Frequenz des hochfrequenten Signals kann sich aus der Regelschleife oder dem Stellwert für die Betriebsschaltung ergeben, beispielsweise abhängig von dem Strom durch die erste Sensoreinheit, die vorzugsweise den Strom durch die LED, durch einen der beiden Schalter S1 oder S3 oder in dem Resonanzkreis, vorzugsweise durch die Spule L1, erfasst. Die Pulsbreite (TON*LF) und optional zusätzlich die Periodendauer des niederfrequenten Signals wird als ganzzahliges Vielfaches der Periodendauer (T_HF) des hochfrequenten Signals gewählt. Die Betriebsschaltung kann auch weitere Filter-oder Glättungsglieder am Ausgang aufweisen, beispielsweise eine Induktivität 33. Der Transformator kann sekundärseitig an seiner Sekundärwicklung 29 auch mehrere Anzapfungen aufweisen, und es können so auch weitere Dioden wie die Diode D1b angeordnet sein, um eine höhere Ausnutzung der übertragenen Energie zu ermöglichen.

Figur 3 und Figur 4 zeigen spezielle weitere Ausführungsformen der Erfindung.

In Figur 3 ist eine spezielle Ausführungsform der oben beschriebenen Schaltanordnung (eines Tiefsetzstellers bzw. Buck-Converter) dargestellt.
Der vorteilhafte Ausschaltzeitpunkt wird hierbei mittels Erfassung der Spannung am Knotenpunkt Ux oberhalb des ersten Schalters S1 detektiert. Diese erfolgt durch den ohmschen Spannungsteiler R1 und R2. Der Knotenpunkt Ux liegt zwischen der Spule L1, der Diode D1 und dem Schalter S1.

Als Spannungsteiler ist beispielsweise auch ein kapazitiver Spannungsteiler oder kombinierter Spannungsteiler, der aus Widerstand und Kapazität aufgebaut ist, möglich. Der Messwiderstand (Shunt) RS dient zur Stromerfassung durch den ersten Schalter S1. Die Überwachung des zeitlichen Spannungsverlaufs am Knotenpunkt Ux (insbesondere des 'Einbruchs' kurz nach Sperren der Diode D1 in der Nähe des Zeitpunkts t_2) ermöglicht eine Aussage über den vorteilhaften Wiedereinschaltzeitpunkt des ersten Schalters S1. Anstatt oder ergänzend zu einer Spannungsüberwachung an der Spule L1 kann beispielsweise die Spannung am Knotenpunktes Ux oberhalb des ersten Schalters S1 überwacht werden. Die Spannung am Knotenpunkt Ux fällt beim Sperren der Diode von einem hohen Wert signifikant ab auf einen niedrigen Wert. Das Signal zum Wiedereinschalten des ersten Schalters S1 kann daher bei Unterschreiten der Spannung Ux unter einem gewissen Schwellwert ausgelöst werden.

In Schaltungsanordnung von Figur 3 ist zusätzlich ein zweiter Schalter S2 parallel zu den LEDs und dem Kondensator C1 angeordnet. Der zweite Schalter S2 ist selektiv/unabhängig ansteuerbar und kann beispielsweise ein Transistor (MOSFET oder Bipolartransistor) sein. Wird der zweite Schalter S2 geschlossen, so wird der Entladevorgang des Kondensators C1 beschleunigt. Durch die beschleunigte Entladung des Kondensators C1 wird erreicht, dass der Stromfluss durch die LED möglichst schnell gegen null geht. Dies ist beispielsweise am Ende eines PWM-Pakets erwünscht, wo der Stromfluss durch die LED möglichst schnell abfallen soll d.h. die abfallende Flanke des Stromsverlaufs möglichst steil sein soll (aus Gründen der Farbkonstanz). Vorzugsweise kann der zweite Schalter S2 bei niedrigem Dimmlevel aktiviert und angesteuert werden, wo die PWM-Pakete sehr kurz sind und es wichtig ist, dass der Strom durch die LED am Ende eines Pulspakets rasch gegen null geht. Beispielsweise kann durch geeignete Ansteuerung des zweiten Schalters S2 ein noch niedrigeres Dimmlevel erreicht werden.Eine weitere Funktion dieses zweiten Schalters S2 ist, dass er im eingeschalteten Zustand die LEDs überbrückt. Dies ist beispielsweise erforderlich, wenn die LEDs ausgeschaltet werden sollen, d.h. kein Licht emittieren sollen, aber die Versorgungsspannung U0 noch anliegt. Ohne die Überbrückung durch den zweiten Schalter S2 würde ein (zwar kleiner) Strom über die LEDs und die Widerstände R1 und R2 fließen und die LEDs (geringfügig) leuchten.

Es sei angemerkt, dass die Anordnung eines zweiten Schalters S2 parallel zu den LEDs und dem Kondensator C1 zur beschleunigten Entladung des Kondensators C1 bzw. zur Überbrückung der LED nicht nur auf die spezielle Ausführungsform der Schaltungsanordnung von Figur 3 beschränkt ist, sondern bei verschiedenen Ausführungsformen der Erfindung als zusätzliche Verbesserung angewandt werden kann.

Figur 4 zeigt eine Modifikation von der Schaltung in Figur 3 dahingehend, dass die Spannungsüberwachung an der Spule L1 erfolgt. Die Spannung an der Spule S1 kann beispielsweise mittels einer Sekundärwicklung L2, die an die Spule S1 gekoppelt ist, (bzw. eine zusätzliche Spule L2, die induktiv an die Spule L1 koppelt) erfasst werden. Zur Detektion des vorteilhaften Einschaltzeitpunkts für den ersten Schalter S1 dient nun eine Sekundärwicklung L2. Die Überwachung des zeitlichen Spannungsverlaufs an der Spule L1 (insbesondere des 'Einbruchs' in der Nähe des Sperrens der Diode D1 nach dem Zeitpunkt t_2) ermöglicht eine Aussage über den vorteilhaften Wiedereinschaltzeitpunkt des ersten Schalters S1. Diese Überwachung kann wie bereits erwähnt auch anhand einer Sekundärwicklung L2 erfolgen.

Die Bestimmung des Zeitpunkts des Nulldurchgangs bzw. der Entmagnetisierung kann wie bereits erwähnt auch mittels einer Schwellwertüberwachung erfolgen (auf das Unter- oder Überschreiten eines Schwellwerts, bei einer Überwachung mittels einer Sekundärwicklung L2 hängt die Polarität der Spannung von dem Wicklungssinn der Sekundärwicklung L2 zu der Spule L1 ab).

Es sei bemerkt, dass das Verfahren zur Detektion eines vorteilhaften Einschaltzeitpunkts für den ersten Schalter S1 natürlich auf andere Schaltungstopologien angewandt werden kann, so beispielsweise für einen sogenannten Sperrwandler bzw. Buck-Boost Converter oder einen sogenannten Durchflusswandler bzw. Forward Converter.

Figur 5 zeigt eine Modifikation der Schaltung von Figur 2a dahingehend, dass die Anordnung der Drossel L1, der Diode D1 sowie der Orientierung der LED-strecke modifiziert ist (bildet Sperrwandler bzw. Buck-Boost Converter).

Eine mögliche Weiterbildung einer Betriebsschaltung für LED ist in Fig. 6 dargestellt. Die Erkennung des Erreichens der Entmagnetisierung der Spule L1 anhand Überwachung der Spannung an der Wicklung L2 kann durch einen standardmäßig verfügbaren Steuerschaltkreis IC durchgeführt werden. Dieser Steuerschaltkreis IC (integrierter Schaltkreis), entspricht der bzw. enthält die Steuereinheit SR gemäß Fig. 2 bis 5, verfügt über einen Eingang zur Erkennung des Erreichens der Entmagnetisierung einer Spule anhand Überwachung der Spannung an einer auf der Spule aufgebrachten Sekundärwicklung. Weiterhin verfügt der Steuerschaltkreis IC über einen Ausgang zur Ansteuerung eines Schalters und über weitere Überwachungseingänge.
Ein erster dieser Überwachungseingänge kann für die Vorgabe eines Referenzwertes wie bspw. einer Referenzspannung genutzt werden.

Ein zweiter Überwachungseingang kann für die Überwachung des Erreichens einer maximalen Spannung oder auch anhand einer Spannungsmessung an einem Widerstand zur Überwachung des Erreichens eines maximalen Stromes genutzt werden. Ein dritter Überwachungseingang kann für die Überwachung einer weiteren Spannung oder auch zur Aktivierung und Deaktivierung des Steuerschaltkreis IC oder der Ansteuerung den Steuerschaltkreis IC angesteuerten Schalters genutzt werden.

Gemäß der Fig. 6 überwacht der Steuerschaltkreis IC den Strom durch den ersten Schalter S1 während der Einschaltphase des ersten Schalters S1 über den Meßwiderstand (Shunt) Rs und den Eingang 4 am Steuerschaltkreis IC. Sobald die Spannung, die über dem Meßwiderstand (Shunt) Rs abgegriffen.wird, einen bestimmten Maximalwert erreicht, wird der ersten Schalter S1 geöffnet. Die Vorgabe der zum Öffnen des ersten Schalters S1 erforderlichen Höhe der Spannung kann durch die Vorgabe eines Referenzwertes (d.h. einer Referenzspannung) am Eingang 3 des Steuerschaltkreis IC angepasst werden. Beispielsweise kann von einem Microcontroller eine Referenzspannung vorgegeben werden, die die Höhe der maximal über dem Meßwiderstand (Shunt) Rs zulässigen Spannung und damit den maximal durch den ersten Schalter S1 zulässigen Strom vorgibt.

Beispielweise kann der Microcontroller ein PWM-Steuersignal ausgeben, dass dann durch ein Filter 10 geglättet wird (beispielsweise ein RC-Glied) und somit als Gleichspannungssignal mit einer bestimmten Amplitude an dem Eingang 3 des Steuerschaltkreis IC anliegt. Durch Änderung des Tastverhältnisses des PWM-Steuersignales des Microcontrollers kann die Amplitude des Signales am Eingang 3 des Steuerschaltkreis IC angepasst werden.

Der Steuerschaltkreis IC kann über den Eingang 5 anhand der Überwachung der Spannung an einer auf der Spule L1 aufgebrachten Sekundärwicklung L2 das Erreichen der Entmagnetisierung der Spule L1 erkennen. Diese Erkennung kann als Wiedereinschaltsignal genutzt werden.

Sobald die Entmagnetisierung der Spule L1 durch den Steuerschaltkreis IC erkannt wurde, kann der Steuerschaltkreis IC den ersten Schalter S1 durch eine Ansteuerung über den Ausgang 7 einschalten.

Der Steuerschaltkreis IC kann durch Anlegen einer Spannung am Eingang 1 aktiviert und / oder auch deaktiviert werden. Diese Spannung zum Aktivieren am Eingang 1 kann auch zwischen einem Hoch- und einem Tiefpegel wechseln, wobei bei Hochpegel der Steuerschaltkreis IC aktiviert wird und bei Tiefpegel zumindest die Ansteuerung des ersten Schalters S1 unterbricht. Diese Ansteuerung des Eingangs 1 kann durch einen Microcontroller erfolgen. Beispielsweise kann auf diese Weise eine niederfrequente Aktivierung und Deaktivierung des Steuerschaltkreis IC und somit der Ansteuerung des ersten Schalters S1 erreicht werden und somit die niederfrequente Ansteuerung des Betriebsschaltung zum Dimmen der LED.

Über den Eingang 1 kann über die Amplitude des an diesem Eingang anliegenden Signales weiterhin auch eine weitere Referenzspannung für den Steuerschaltkreis IC vorgegeben werden. Diese Spannung kann beispielsweise auch die Höhe des maximal zulässigen Stromes durch den Schalter beeinflussen oder aber auch die zulässige Einschaltdauer des ersten Schalters S1. Der Steuerschaltkreis IC und/oder der Steuerschaltkreis IC kombiniert mit dem Microcontroller können gemeinsam die Steuereinheit SR bilden.

Gemäß der Erfindung kann das Signal PWM, welches dem Eingang 1 des Steuerschaltkreis IC zugeführt wird, gemäß der Erfindung über ein Koppelglied, beispielsweise durch einen ohmschen Widerstand, mit dem Ansteuersignal, welches an dem Ausgang 7 ausgegeben wird, verknüpft werden.
Optional kann das Signal PWM auch nur mit dem Signal des Ausgangs 7 verknüpft werden und nicht dem Eingang 1 zugeführt werden.

Die Einschaltdauer des ersten Schalters S1 kann auch von einer weiteren Spannungsmessung innerhalb der Betriebsschaltung abhängig sein.
Beispielweise kann dem Steuerschaltkreis IC auch eine Spannungsmessung Vsense zugeführt werden.
Über diese Spannungsmessung kann über einen Spannungsteiler R40/ R47 beispielweise eine Überwachung oder auch Messung der Spannung am Knotenpunkt zwischen Spule L1 und LED erfolgen. Diese Spannungsmessung Vsense kann entweder einem weiteren Eingang des Steuerschaltkreises IC, als zusätzliche Größe additiv einem bereits belegten Eingang des Steuerschaltkreis IC oder auch einen Eingang des Microcontrollers zugeführt werden.

Somit kann ein System aufgebaut werden, bei dem zum einen eine einfache Ansteuerung zum Dimmen von LED durch niederfrequente PWM ermöglicht wird, zum anderen ein möglichst verlustarmer hochfrequenter Betrieb des Betriebsgerätes kombiniert mit einem möglichst konstanten Strom durch die LED.

Es kann durch einen Microcontroller sowohl die Frequenz als auch das Tastverhältnis eines PWM-Singales zum Dimmen von LED vorgegeben werden, daneben kann auch die Höhe des maximal zulässigen Stromes durch den ersten Schalter S1 vorgegeben werden. Der Microcontroller kann über ein Signal, welches an den Eingang 1 des Steuerschaltkreis IC geführt wird, das Dimmen der LED durch niederfrequente PWM steuern. Weiterhin kann der Microcontroller über ein Signal, welches an den Eingang 3 des Steuerschaltkreis IC geführt wird, die Höhe des maximal zulässigen Stromes durch den ersten Schalter S1 oder auch die notwendige Einschaltdauer des ersten Schalters S1 vorgegeben.

Die Betriebsschaltung kann weiterhin einen weiteren Schalter S2 enthalten, der so angeordnet ist, dass dieser zweiten Schalter S2 die LED überbrücken kann.

Der zweite Schalter S2 kann weiterhin so angeordnet sein, dass er den Strom durch einen vorhandenen hochohmigen Spannungsmesspfad oder eine ähnliche vorhandene hochohmige Schaltungsanordnung von der LED übernehmen oder diesen unterbrechen kann.

Durch Parallelschaltung des zweiten Schalters S2 zu den LED kann dieser die LED überbrücken und somit deaktivieren. Dieses Verfahren kann zum Einstellen der Helligkeit (Dimmen) der LED genutzt werden. Eine mögliche alternative Variante wäre, dass das Dimmen über den zweiten Schalter S2 erfolgt, während über die Ansteuerung des ersten Schalters S1 nur der Strom durch die LED eingestellt und geregelt wird.

Es kann aber die Ansteuerung der beiden Schalter S1 und S2 für eine optimierte Dimmansteuerung kombiniert genutzt werden. So kann beispielsweise der zweite Schalter S2 nur für das Dimmen auf niedrige Dimmlevel zusätzlich genutzt werden. Die Betriebsschaltung ist aufgrund der vorhandenen Topologie und der Regelschaltung so ausgelegt, dass die Ausgangsspannung der Betriebsschaltung (d.h. die Spannung über der LED) auf einen maximal zulässigen Wert begrenzt wird. Wird durch Schließen des zweiten Schalters S2 die LED überbrückt, dann begrenzt die Betriebsschaltung die Ausgangsspannung derart, dass kein überhöhter Strom fließen kann, der zu einer möglichen Zerstörung führen kann.
Diese Ansteuerung des zweiten Schalters S2 kann beispielsweise nur für das Dimmen auf niedrige Dimmlevel genutzt werden.

Wenn der Tiefsetzsteller (Buck-Converter) fix auf Stromquellenbetrieb (im sogenannten Hysteritischen Modus wie in den Ausführungsbeispielen beschrieben) arbeitet und effizient läuft, können die LED bei bestimmten Helligkeitsbereichen oder Betriebsmodi auch einzig mit zweiten Schalter S2, der sehr niederohmig sein sollte, gedimmt werden, und die Verluste sind trotzdem gering.

Zusätzlich kann der zweite Schalter S2 so angesteuert werden, dass er den Strom durch einen vorhandenen hochohmigen Spannungsmesspfad oder eine ähnliche vorhandene hochohmige Schaltungsanordnung von der LED übernehmen kann.

Wenn beispielsweise gemäß Fig. 6 der erste Schalter S1 nicht getaktet wird, sollte kein Strom durch die LED fließen. Aufgrund des vorhandenen Spannungsteilers R40 / R47 kann jedoch ein geringer Strom durch die LED fließen. In diesem Fall kann bei einer gewünschten Deaktivierung der LED (beispielsweise wenn kein Licht abgegeben werden soll) der zweite Schalter S2 geschlossen werden, damit der Stromfluß durch die LED unterbrochen oder vermieden wird.

Der zweite Schalter S2 kann zumindest immer im Anschluss an ein niederfrequentes PWM-Paket angesteuert werden, um die LED zu überbrücken bzw. zu deaktivieren (während der letzten Entladeflanke, das heißt am Ende eines PWM Pulspaketes).

Eine Unterbrechung des Stromes durch die LED kann auch durch Anordnung des zweiten Schalters S2 in Serie mit den LED erfolgen.

Das Beispiel der Fig. 6 (und die anderen natürlich auch) kann dahingehend erweitert werden, dass mehrere Betriebsschaltungen gemäß Figur 6 vorhanden sind. Die Steuerschaltkreise IC bzw. die Steuereinheiten SR der einzelnen Betriebsschaltungen werden von einem gemeinsamen Microcontroller aus angesteuert. Die einzelnen Betriebsschaltungen können beispielsweise LED-stränge unterschiedlicher Wellenlänge oder Farbe ansteuern. Die Ansteuerung des Microcontrollers kann über eine Schnittstelle (drahtlos oder leitungsgebunden) erfolgen. Dabei können Steuersignale zum Einstellen der Helligkeit oder Farbe oder auch Statusinformationen über die Schnittstelle übertragen werden.

## Patentansprüche

1. Betriebsschaltung für wenigstens eine LED, der eine Gleichspannung oder gleichgerichtete Wechselspannung zugeführt wird und die mittels einer Spule (L1) und einem durch eine Steuereinheit (SR) getakteten ersten Schalter (S1) eine Versorgungsspannung für wenigstens eine LED bereitstellt, wobei bei eingeschaltetem erstem Schalter (S1) in der Spule (L1) eine Energie zwischengespeichert wird, die sich bei ausgeschaltetem erstem Schalter (S1) über eine Diode (D1) und über wenigstens eine LED entlädt, die Steuereinheit (SR) den ersten Schalter (S1) mit einem Dimm-Signal ansteuert, wobei das Dimm-Signal durch eine Verknüpfung eines niederfrequenten Signals und eines hochfrequenten Signals erzeugt wird,
**dadurch gekennzeichnet, dass** die Betriebsschaltung derart eingerichtet ist, dass eine Pulsbreite (TON*LF) des niederfrequenten Signals, die eine Breite eines Pulspakets des hochfrequenten Signals definiert, als ganzzahliges Vielfaches der Periodendauer (T_HF) des hochfrequenten Signals gewählt wird.

2. Betriebsschaltung nach Anspruch 1, **gekennzeichnet**
**dadurch, dass** die Steuereinheit (SR) das niederfreqeunte Signal und das hochfrequente Signal intern zu dem Dimm-Signal verknüpft und das Dimm-Signal an einem Ausgang der Steuereinheit (SR) ausgibt.

3. Betriebsschaltung nach Anspruch 2, **gekennzeichnet dadurch, dass** beim Dimmen der LED die Frequenz des niederfrequenten Signals geändert wird.

4. Betriebsschaltung nach Anspruch 3, **gekennzeichnet dadurch, dass** die Änderung der Frequenz des niederfrequenten Signals abhängig von der Änderung der Pulsbreite (TON*LF) des niederfrequenten Signals gewählt wird.

5. Betriebsschaltung nach einem der Ansprüche 2 bis 4, **gekennzeichnet dadurch, dass** die Änderung der Frequenz und der Pulsbreite (TON*LF) des niederfrequenten Signals derart erfolgt, dass das Einschaltverhältnis des niederfrequenten Signals bei konstantem Dimmlevel konstant bleibt.

6. Betriebsschaltung nach einem der vorangehenden Ansprüche, **gekennzeichnet dadurch, dass** das niederfrequente Signal ein niederfrequent gepulstes Signal ist, vorzugsweise im Bereich von 100 Hz bis 1000 Hz.

7. Betriebsschaltung nach einem der vorangehenden Ansprüche, **gekennzeichnet dadurch, dass** das hochfrequente Signal ein hochfrequent gepulstes Signal, insbesondere ein PWM-Signal ist, vorzugsweise im Bereich von 50 kHz.

8. Betriebsschaltung nach einem der vorangehenden Ansprüche, **gekennzeichnet dadurch, dass** eine Änderung der Helligkeit der LED durch eine Änderung der Frequenz des niederfrequenten Signals erfolgt.

9. Betriebsschaltung nach einem der vorangehenden Ansprüche, **gekennzeichnet dadurch, dass** das niederfrequente Signal vom Dimmlevel der LED abhängig ist und / oder das hochfrequente Signal vom Strom und / oder der Spannung durch die LED abhängig ist.

10. Betriebsschaltung nach einem der vorangehenden
Ansprüche, **gekennzeichnet dadurch, dass** die Betriebsschaltung eingerichtet ist, um das hochfrequente Signals abhängig von einer Regelschleife zu erzeugen, wobei abhängig von zumindest einem vorgegebenen Sollwert für einen Strom und / oder eine Spannung innerhalb der Betriebsschaltung und einem Vergleich mit einem Istwert zumindest der erste Schalter (S1) getaktet wird.

11. Betriebsschaltung nach Anspruch 10, wobei die
Steuereinheit (SR) eingerichtet ist, um den ersten Schalter (S1) bei einem Nulldurchgang eines Spulenstroms der Spule (L1) einzuschalten.

12. Verfahren zur Ansteuerung wenigstens einer LED, der
eine Gleichspannung oder gleichgerichtete Wechselspannung zugeführt wird und der mittels einer Spule (L1) und einem durch eine Steuereinheit (SR) getakteten ersten Schalter (S1) eine Versorgungsspannung für wenigstens eine LED bereitstellt, wobei bei eingeschaltetem erstem Schalter S1 in der Spule (L1) eine Energie zwischengespeichert wird, die sich bei ausgeschaltetem erstem Schalter (S1) über eine Diode (D1) und über wenigstens eine LED entlädt,
wobei die Steuereinheit (SR) den ersten Schalter (S1) mit einem Dimm-Signal ansteuert, wobei das Dimm-Signal durch eine externe Verknüpfung eines niederfrequenten Signals und eines hochfrequenten Signals erzeugt wird, **dadurch gekennzeichnet, dass** eine Pulsbreite (TON*LF) des niederfrequenten Signals, die eine Breite eines Pulspakets des hochfrequenten Signals definiert, als ganzzahliges Vielfaches der Periodendauer (T_HF) des hochfrequenten Signals gewählt wird.

## Claims

1. Operating circuit for at least one LED that is supplied with a DC voltage or rectified AC voltage and provides a supply voltage for at least one LED by means of a coil (L1) and a first switch (S1) clocked by a control unit (SR), wherein with the first switch (S1) being switched on an energy is stored temporarily in the coil (L1) that discharges with the first switch (S1) being switched off via a diode (D1) and via at least one LED, the control unit (SR) actuates the first switch (S1) with a dimming signal, wherein the dimming signal is generated by a linking of a low-frequency signal and a high-frequency signal,
**characterized in that** the operating circuit is equipped in such a way that a pulse width (TON*LF) of the low-frequency signal that defines a width of a pulse packet of the high-frequency signal is selected as integer multiple of the cycle duration (T_HF) of the high-frequency signal.

2. Operating circuit according to claim 1, **characterized in that** the control unit (SR) of the low-frequency signal and the high-frequency signal is linked internally to the dimming signal and outputs the dimming signal on an outlet of the control unit (SR).

3. Operating circuit according to claim 2, **characterized in that** the frequency of the low-frequency is changed when the LED is dimmed.

4. Operating circuit according to claim 3, **characterized in that** the changing of the frequency of the low-frequency is selected dependent on the changing of the pulse width (TON*LF) of the low-frequency signal.

5. Operating circuit according to one of the claims 2 to 4, **characterized in that** the changing of the frequency and the pulse width (TON*LF) of the low-frequency signal takes place in such a way that the multicycle control factor of the low-frequency signal remains constant with constant dimming levels.

6. Operating circuit according to one of the preceding claims, **characterized in that** the low-frequency signal is a low-frequency pulsed signal, preferably in the range of 100 Hz to 1000 Hz.

7. Operating circuit according to one of the preceding claims, **characterized in that** the high-frequency signal is a high-frequency pulsed signal, especially a PWM signal, preferably in the range of 50 kHz.

8. Operating circuit according to one of the preceding claims, **characterized in that** a changing of the brightness of the LED takes place by a changing of the frequency of the low-frequency signal.

9. Operating circuit according to one of the preceding claims, **characterized in that** the low-frequency signal is dependent on the dimming level of the LED and/or the high-frequency signal is dependent on the current and/or the voltage through the LED.

10. Operating circuit according to one of the preceding claims, **characterized in that** the operating circuit is equipped for generating the high-frequency signal dependent on a control loop, wherein at least the first switch (S1) is clocked dependent on at least one preset target value for a current and/or voltage within the operating circuit and a comparison with an actual value.

11. Operating circuit according to claim 10, wherein the control unit (SR) is equipped to switch on the first switch (S1) during a zero point of a coil current of the coil (L1).

12. Method for actuating at least one LED that is supplied with a DC voltage or rectified AC voltage and provides a supply voltage for at least one LED by means of a coil (L1) and a first switch (S1) clocked by a control unit (SR), wherein with the first switch (S1) being switched on an energy is stored temporarily in the coil (L1) that discharges with the first switch (S1) being switched off via a diode (D1) and via at least one LED, wherein the control unit (SR) actuates the first switch (S1) with a dimming signal, wherein the dimming signal is generated by an external linking of a low-frequency signal and a high-frequency signal, **characterized in that** a pulse width (TON*LF) of the low-frequency signal that defines a width of a pulse packet of the high-frequency signal is selected as integer multiple of the cycle duration (T_HF) of the high-frequency signal.

## Revendications

1. Circuit de commande pour au moins une DEL étant alimentée par une tension de courant continu ou par une tension alternative rectifiée et pourvu d'une tension d'alimentation pour au moins une DEL au moyen d'une bobine (L1) et d'un premier commutateur (S1) cadencé par une unité de commande (SR), dans lequel avec le premier commutateur (S1) étant allumé, une énergie est temporairement stockée dans la bobine (L1) qui se décharge, avec le premier commutateur (S1) étant éteint, via une diode (D1) et via au moins une DEL, l'unité de commande (SR) actionne le premier commutateur (S1) avec un signal de variation de lumière, dans lequel le signal de variation de lumière est généré par une liaison d'un signal basse fréquence et d'un signal haute fréquence,
**caractérisé en ce que** le circuit de commande est équipé de telle manière qu'une largeur d'impulsion (TON*LF) du signal basse fréquence qui définit une largeur d'un train d'impulsions du signal haute fréquence est sélectionnée comme étant un multiple entier de la durée du cycle (T_HF) du signal haute fréquence.

2. Circuit de commande selon la revendication 1, **caractérisé en ce que** l'unité de commande (SR) du signal basse fréquence et du signal haute fréquence est liée intérieurement au signal de variation de lumière et émet le signal de variation de lumière sur une sortie de l'unité de commande (SR).

3. Circuit de commande selon la revendication 2, **caractérisé en ce que** la fréquence du signal basse fréquence est modifiée lorsque la DEL est atténuée.

4. Circuit de commande selon la revendication 3, **caractérisé en ce que** la modification de la fréquence du signal basse fréquence est sélectionnée selon la modification de la largeur d'impulsion (TON*LF) du signal basse fréquence.

5. Circuit de commande selon l'une des revendications de 2 à 4, **caractérisé en ce que** la modification de la fréquence et de la largeur d'impulsion (TON*LF) du signal basse fréquence a lieu de telle manière que le facteur de réglage par train d'ondes du signal basse fréquence reste constant avec des niveaux de variation de lumière constants.

6. Circuit de commande selon l'une des revendications précédentes, **caractérisé en ce que** le signal basse fréquence est un signal pulsé de basse fréquence, de préférence compris entre 100 et 1000 Hz.

7. Circuit de commande selon l'une des revendications précédentes, **caractérisé en ce que** le signal haute fréquence est un signal pulsé de haute fréquence, plus précisément un signal MID, de préférence de l'ordre de 50 kHz.

8. Circuit de commande selon l'une des revendications précédentes, **caractérisé en ce qu'**une modification de la luminosité de la DEL s'effectue par une modification de la fréquence du signal basse fréquence.

9. Circuit de commande selon l'une des revendications précédentes, **caractérisé en ce que** le signal basse fréquence dépend du niveau de variation de lumière de la DEL et/ou le signal haute fréquence dépend du courant et/ou de la tension passant à travers la DEL.

10. Circuit de commande selon l'une des revendications précédentes, **caractérisé en ce que** le circuit de commande est équipé pour générer le signal haute fréquence selon une boucle de régulation, dans lequel au moins le premier commutateur (S1) est cadencé selon au moins une valeur cible prédéfinie pour un courant et/ou une tension à l'intérieur du circuit de commande et une comparaison avec une valeur réelle.

11. Circuit de commande selon la revendication 10, dans lequel l'unité de commande (SR) est équipée pour commuter sur le premier cummulateur (S1) lors d'un point zéro d'un courant de bobine de la bobine (L1).

12. Procédé d'actionnement d'au moins une DEL étant alimentée par une tension de courant continu ou par une tension alternative rectifiée et pourvu d'une tension d'alimentation pour au moins une DEL au moyen d'une bobine (L1) et d'un premier commutateur (S1) cadencé par une unité de commande (SR), dans lequel avec le premier commutateur (S1) étant allumé, une énergie est temporairement stockée dans la bobine (L1) qui se décharge, avec le premier commutateur (S1) étant éteint, par une diode (D1) et par au moins une DEL, dans lequel l'unité de commande (SR) actionne le premier commutateur (S1) avec un signal de variation de lumière, dans lequel le signal de variation de lumière est généré par une liaison externe d'un signal basse fréquence et d'un signal haute fréquence, **caractérisé en ce qu'**une largeur d'impulsion (TON*LF) du signal basse fréquence qui définit une largeur d'un train d'impulsions du signal haute fréquence est sélectionnée comme étant un multiple entier de la durée du cycle (T_HF) du signal haute fréquence.
